# EUROPÄISCHE PATENTSCHRIFT

(11) **EP 1 400 381 B1**
(45) Veröffentlichungstag und Bekanntmachung des Hinweises auf die Patenterteilung: **28.10.2009**
(21) Anmeldenummer: 03019411.2
(22) Anmeldetag: 28.08.2003
(51) Int. Cl.: B60H 1/00, F24F 13/04

(54) **Mischvorrichtung zum Mischen von kalter und warmer Luft, insbesondere für eine Heizungs- oder Klimaanlage eines Kraftfahrzeugs**
Mixing device for mixing cold and hot air, in particular for heating or air conditioning arrangement in a vehicle
Dispositif de mélange pour mélanger de l air chaud ou froid, notamment pour système de chauffage ou de climatisation dans un véhicule

(30) Priorität: 19.09.2002 DE 10243658
(43) Veröffentlichungstag der Anmeldung: 24.03.2004
(73) Patentinhaber: Behr GmbH & Co. KG, 70469 Stuttgart (DE)
(72) Erfinder: Hegner, Hilmar, 71364 Winnenden (DE); Klingler, Dietrich, 73540 Heubach (DE); Voigt, Klaus, 74321 Bietigheim-Bissingen (DE)
(74) Vertreter: Grauel, Andreas

(56) Entgegenhaltungen:
- DE-A- 2 455 339
- DE-A- 3 908 660
- GB-A- 612 012
- GB-A- 705 572
- US-A- 2 860 567

## Beschreibung

Die Erfindung betrifft eine Mischvorrichtung zum Mischen von kalter und warmer Luft, insbesondere für eine Heizungs- oder Klimaanlage eines Kraftfahrzeugs, gemäß dem Oberbegriff des Anspruchs 1.

Zum Mischen von warmer und kalter Luft ist aus der DE 198 26 990 A1 eine Luftmischeinrichtung für eine Heizungs- oder Klimaanlage eines Kraftfahrzeugs bekannt, mit einem Kaltlufteinlass und einem Warmlufteinlass sowie einem Auslass für einen Mischluftstrom, mit mehreren aus parallelen Kanalwänden gebildeten Kanälen, die sich an die Lufteinlässe anschließen, und mit aus mehreren Lamellen aufgebauten Jalousienklappen zum Öffnen und Schließen der Lufteinlässe. Um eine verbesserte Luftmischeinrichtung bereitzustellen, die einfach aufgebaut ist, einen geringen Bauraum für die Mischung von Kalt- und Warmluft ermöglicht und trotz des geringen Bauraums eine optimale Vermischung von Kalt- und Warmluft bewirkt, wobei die Vermischung von Kalt- und Warmluft über den Mischluftstromquerschnitt variabel sein soll, um über den Luftauslassquerschnitt hinweg ein gewünschtes Temperaturprofil des Mischluftstroms erhalten zu können, wird in der DE 198 26 990 A1 vorgeschlagen, dass jeweils eine Lamelle einen einzelnen Kanaleinlass abdeckt und die Lamellen einzeln oder gruppenweise ansteuerbar sind. Dabei sind die Lufteinlässe in einem Winkel zueinander angeordnet und weisen jeweils einen rechteckförmigen Querschnitt auf.

Aus der gattungsgemäßen DE 2 455 339 ist eine Vorrichtung zum Heizen und Belüften von Kraftfahrzeugen bekannt, welche einen beheizbaren Warmluftkanal und einen Kaltluftbypass, ein Gebläse, sowie eine Vorrichtung zum Mischen der Kalt- und Warmluft aufweist. Die Vorrichtung zum Mischen der Kalt- und Warmluft ist als etwa halbkreisförmige Regelscheibe ausgebildet. Der Warmluftkanal, sowie der Kaltluftbypass weisen jeweils eine etwa halbkreisförmige Durchströmöffnung auf, die sich zu einer Kreisfläche ergänzen und von der Regelscheibe jeweils abdeckbar sind.

Eine derartige Luftmischeinrichtung lässt jedoch insbesondere im Hinblick auf die Kosten noch Wünsche offen.

Es ist Aufgabe der Erfindung, eine verbesserte Mischvorrichtung zur Verfügung zu stellen.

Diese Aufgabe wird gelöst durch eine Mischvorrichtung mit den Merkmalen des Anspruchs 1. Vorteilhafte Ausgestaltungen sind Gegenstand der Unteransprüche.

Erfindungsgemäß ist eine Mischvorrichtung zum Mischen von kalter und warmer Luft, die über je einen Kaltluft-Einlass und einen Warmluft-Einlass zugeführt werden, vorgesehen, die einen Bereich aufweist, in dem der Kaltluft-Einlass und der Warmluft-Einlass parallel zueinander verlaufen. Dabei weisen beide Einlässe einen halbkreisförmigen Querschnitt auf und sind durch eine Trennwand getrennt. Eine derartige Mischvorrichtung kann auf einfache Weise als Kunststoff-Spritzgussteil ausgebildet sein und bietet daher deutliche Kostenvorteile verglichen mit herkömmlichen Mischvorrichtungen.

Die Mischvorrichtung weist senkrecht zu einer in radialer Richtung entsprechend der Trennwand verlaufenden Achse vorzugsweise leicht in Strömungsrichtung geneigte Kanäle auf.

Vorzugsweise sind die Kanäle auf Lücke im Kaltluft-Einlass und Warmluft-Einlass angeordnet. Dies ermöglicht einen optimalen Austausch der kalten und warmen Luft und bietet ferner eine erhöhte Stabilität der Mischvorrichtung. Auch in Hinblick auf die Herstellung als Kunststoff-Spritzgussteil bietet eine derartige Ausgestaltung Vorteile.

Vorzugsweise sind die Rücken der Kanäle kreisförmig, oval oder insbesondere strömungslinienförmig abgerundet. Dies verringert den Strömungswiderstand der Mischvorrichtung.

Vorzugsweise sind im Bereich von jedem Einlass fünf bis zehn, insbesondere sechs bis sieben Kanäle angeordnet, wobei sich die Anzahl der Kanäle auf den beiden Seiten um eins oder zwei unterscheiden kann.

Vorzugsweise nimmt die kanalfreie Breite von der Trennwand ausgehend zum Rand des Auslasses hin zu, wodurch der Strömungsverlauf im Kanal optimiert wird. Entsprechend nimmt die zum anderen Einlass führende Kanalbreite zum Rand hin ab.

Vorzugsweise sind die Kanäle bogenförmig ausgebildet. Dies optimiert den Strömungsverlauf in den Kanälen und sorgt für eine gute Vermischung. Dabei sind die Kanäle insbesondere derart ausgebildet, dass der Winkel zur normalen Strömungsrichtung zum Rand des Mischluft-Auslasses hin zunimmt.

Im Folgenden wird die Erfindung anhand eines Ausführungsbeispiels unter Bezugnahme auf die Zeichnung im Einzelnen erläutert. In der Zeichnung zeigen:

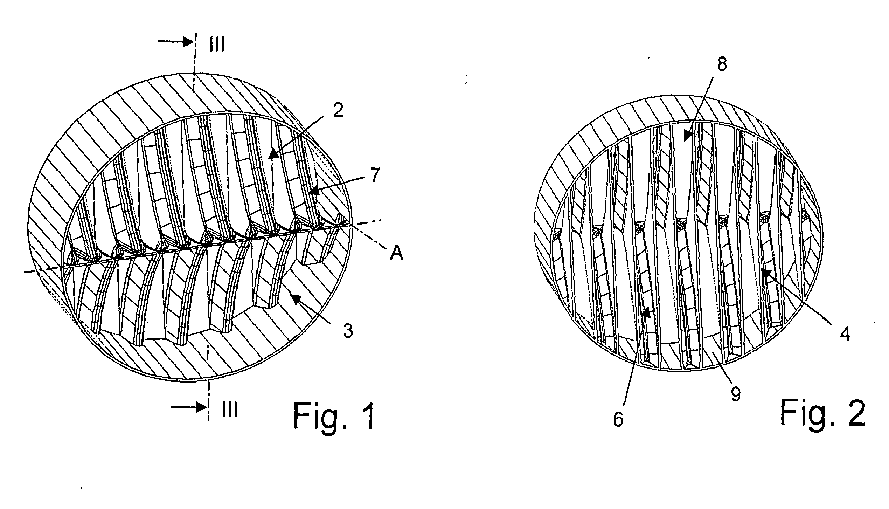

- Fig. 1: eine Ansicht der Mischvorrichtung mit Blick auf die von der Luft angeströmte Seite,
- Fig. 2: eine Ansicht mit Blick auf die entgegengesetzte Seite von Fig. 1, und
- Fig. 3: einen Schnitt in Längsrichtung mit einer schematischen Darstellung des Strömungsverlaufs.

Eine erfindungsgemäße Mischvorrichtung 1 in Form eines Kunststoff-Spritzgussteils mit einem Kaltluft-Einlass 2, einem Warmluft-Einlass 3 und einem Mischluft-Auslass 4 ist derart ausgebildet, dass die beiden Einlässe 2 und 3 jeweils einen halbkreisförmigen Querschnitt haben, durch eine Trennwand 5 getrennt sind und sich zu einem Kreis ergänzen, dessen Querschnitt dem des Auslasses 4 entspricht. Die beiden Einlässe 3 und 4 verlaufen in einem Bereich parallel zueinander. Dabei kann dieser Bereich beispielsweise durch ein weiteres Teil (nicht dargestellt) oder einstückig mit der beschriebenen Mischvorrichtung 1 gebildet werden, dem ein Übergangsbereich vorangeht, in dem die Einlässe 2 und 3 von einem anfänglich kreisförmigen Querschnitt in den besagten halbkreisförmigen Querschnitt überführt und zusammengeführt werden.

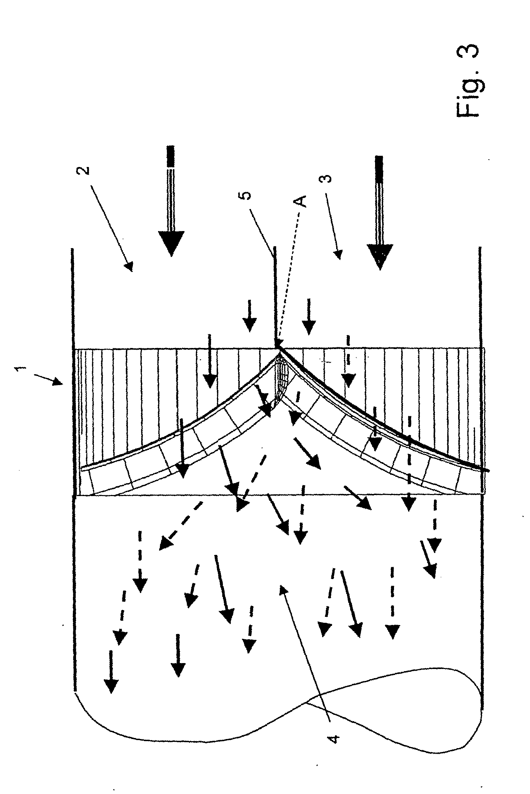

Die eigentliche Vermischung der kalten und warmen Luft (die kalte Luft ist durch durchgehende Pfeile, die warme Luft durch gestrichelte Pfeile in Fig. 3 dargestellt) erfolgt am Ende der Trennwand 5. Hier sind quer zur normalen Strömungsrichtung der Luft und senkrecht zu einer Achse A Kanäle 6 vorgesehen, welche die in sie einströmende kalte Luft vom Kaltluft-Einlass 2 auf die andere Seite, d.h. vor den Warmluft-Einlass 3, und die warme Luft vom Warmluft-Einlass 3 auf die andere Seite, d.h. vor den Kaltluft-Einlass 2, leiten. Die nicht in die Kanäle 6 eingeströmte Luft wird im Wesentlichen geradeaus weitergeleitet, so dass ein Austausch im Bereich des Mischluft-Auslasses 4 stattfindet.

Die Kanäle 6 sin derart ausgebildet, dass ihr etwa stromlinienförmig ausgebildeter Rücken 7 einen leichten Bogen von der Trennwand 5 ausgehend zum Wandbereich macht, wobei der Winkel zur normalen Strömungsrichtung in Richtung des Wandbereichs zunimmt, jedoch am Ende noch kleiner als 90° ist. Ferner nimmt die Breite der Kanäle von der Trennwand 5 ausgehend zum Wandbereich hin ab, so dass der frei durchströmbare Bereich 8 breiter wird. Die Wandungen 9 der Kanäle enden über die gesamte Kanallänge hinweg auf der gleichen Höhe des Mischluft-Auslasses 4 (vgl. Fig. 3).

Gemäß dem vorliegenden Ausführungsbeispiel sind sieben Kanäle 6 vorgesehen, die Kaltluft in den Bereich hinter den Warmluft-Einlass 3 und sechs Kanäle 6 vorgesehen, die Warmluft in den Bereich hinter den Kaltluft-Einlass 2 leiten.

### Bezugszeichenliste

1 Mischvorrichtung
2 Kaltluft-Einlass
3 Warmluft-Einlass
4 Mischluft-Auslass
5 Trennwand
6 Kanal
7 Rücken
8 frei durchströmbarer Bereich
9 Wandung
A Achse

## Patentansprüche

1. Mischvorrichtung zum Mischen von kalter und warmer Luft, insbesondere für eine Heizungs- oder Klimaanlage eines Kraftfahrzeugs, mit einem Kaltluft-Einlass (2) und einem Warmluft-Einlass (3) sowie einem Mischluft-Auslass (4), wobei die Mischvorrichtung (1) einen Bereich aufweist, in dem der Kaltluft-Einlass (2) und der Warmluft-Einlass (3) parallel zueinander verlaufen, beide Einlässe (2, 3) einen halbkreisförmigen Querschnitt aufweisen und die beiden Einlässe (2, 3) durch eine Trennwand (5) getrennt sind, **dadurch gekennzeichnet, dass** quer zur normalen Strömungsrichtung der Luft und senkrecht zu einer in radialer Richtung entsprechend der Trennwand (5) verlaufenden Achse (A) Kanäle (6) vorgesehen sind, welche die in sie einströmende kalte Luft vom Kaltluft-Einlass (2) auf die andere Seite, vor den Warmluft-Einlass (3) und die warme Luft vom Warmluft-Einlass (3) auf die andere Seite vor den Kaltluft-Einlass (2), leiten, wobei die nicht in die Kanäle (6) eingeströmte Luft im Wesentlichen geradeaus weitergeleitet wird, so dass ein Austausch im Bereich des Mischluft-Auslasses (4) stattfindet.

2. Mischvorrichtung nach Anspruch 1, **dadurch gekennzeichnet, dass** die Mischvorrichtung (1) leicht in Strömungsrichtung geneigte Kanäle (6) aufweist.

3. Mischvorrichtung nach Anspruch 1 oder 2, **dadurch gekennzeichnet, dass** die Kanäle (6) auf Lücke im Kaltluft-Einlass (2) und Warmluft-Einlass (3) angeordnet sind.

4. Mischvorrichtung nach einem der vorhergehenden Ansprüche, **dadurch gekennzeichnet, dass** die Rücken (7) der Kanäle (6) kreisförmig, oval oder strömungslinienförmig abgerundet sind.

5. Mischvorrichtung nach einem der vorhergehenden Ansprüche, **dadurch gekennzeichnet, dass** in jedem Einlass (2, 3) fünf bis zehn, insbesondere sechs bis acht Kanäle angeordnet sind.

6. Mischvorrichtung nach einem der vorhergehenden Ansprüche, **dadurch gekennzeichnet, dass** die kanalfreie Breite von der Trennwand (5) ausgehend zum Rand des Auslasses (4) hin zunimmt.

7. Mischvorrichtung nach einem der vorhergehenden Ansprüche, **dadurch gekennzeichnet, dass** die von einem Einlass (2 oder 3) zum anderen Einlass (3 bzw. 2) führende Kanalbreite zum Rand hin abnimmt.

8. Mischvorrichtung nach einem der vorhergehenden Ansprüche, **dadurch gekennzeichnet, dass** die Kanäle (6) bogenförmig ausgebildet sind.

9. Mischvorrichtung nach Anspruch 8, **dadurch gekennzeichnet, dass** die Kanäle (6) derart ausgebildet sind, dass der Winkel zur normalen Strömungsrichtung zum Rand des Mischluft-Auslasses (4) hin zunimmt.

10. Mischvorrichtung nach einem der vorhergehenden Ansprüche, **dadurch gekennzeichnet, dass** die Mischvorrichtung (1) ein Kunststoff-Spritzgussteil ist.

11. Mischvorrichtung nach einem der vorhergehenden Ansprüche, **dadurch gekennzeichnet, dass** die Einlässe (2, 3) derart ausgebildet sind, dass sich der Querschnitt über die Länge hinweg von einem kreisförmigen Querschnitt zu einem halbkreisförmigen Querschnitt ändert.

## Claims

1. Mixing device for mixing cold and hot air, in particular for a heating or air conditioning arrangement of a vehicle, with a cold air inlet (2) and a hot air inlet (3), and with a mixing air outlet (4), wherein the mixing device (1) has a region in which the cold air inlet (2) and the hot air inlet (3) run parallel to one another, both inlets (2, 3) have a semicircular cross section, and the two inlets (2, 3) are separated by a partition wall (5), **characterised in that** channels (6) are provided transversely to the normal flow direction of the air and vertical to an axis (A) running in the radial direction corresponding to the partition wall (5), which channels guide the cold air flowing into them from the cold air inlet (2) to the other side, in front of the hot air inlet (3), and the hot air from the hot air inlet (3) to the other side in front of the cold air inlet (2), wherein the air which has not flown into the channels (6) is essentially guided straight ahead, so that an exchange takes place in the region of the mixing air outlet (4).

2. Mixing device according to claim 1, **characterised in that** the mixing device (1) has channels (6) sloping slightly in the flow direction.

3. Mixing device according to claim 1 or 2, **characterised in that** the channels (6) are arranged on the clearance in the cold air inlet (2) and the hot air inlet (3).

4. Mixing device according to one of the preceding claims, **characterised in that** the edges (7) of the channels (6) are rounded in a circular, oval or a flow line form.

5. Mixing device according to one of the preceding claims, **characterised in that** five to ten, especially six to eight channels are arranged in each inlet (2, 3).

6. Mixing device according to one of the preceding claims, **characterised in that** the channel-free width increases, starting from the partition wall (5) towards the edge of the outlet (4).

7. Mixing device according to one of the preceding claims, **characterised in that** the channel width leading from one inlet (2 or 3) to the other inlet (3 or 2) decreases towards the edge.

8. Mixing device according to one of the preceding claims, **characterised in that** the channels (6) are formed in an arcuate manner.

9. Mixing device according to claim 8, **characterised in that** the channels (6) are formed in such a manner that the angle to the normal flow direction increases towards the edge of the mixing air outlet (4).

10. Mixing device according to one of of the preceding claims, **characterised in that** the mixing device (1) is a plastics injection moulding part.

11. Mixing device according to one of of the preceding claims, **characterised in that** the inlets (2, 3) are formed in such a manner that the cross section changes over the length from a circular cross section to a semicircular cross section.

## Revendications

1. Dispositif de mélange servant à mélanger de l'air froid et chaud, en particulier pour un système de chauffage ou de climatisation d'un véhicule automobile, comprenant une entrée (2) d'air froid et une entrée (3) d'air chaud ainsi qu'une sortie (4) d'air de mélange, où le dispositif de mélange (1) présente une zone dans laquelle l'entrée (2) d'air froid et l'entrée (3) d'air chaud s'étendent parallèlement l'une à l'autre, les deux entrées (2, 3) présentent une section en forme de demi-cercle et les deux entrées (2, 3) sont séparées par une paroi de séparation (5),
**caractérisé en ce que**, de façon transversale par rapport à la direction normale d'écoulement de l'air et perpendiculairement à un axe (A) s'étendant en correspondant à la paroi de séparation (5) dans le sens radial, il est prévu des conduits (6) qui dirigent l'air froid entrant dans ces conduits et provenant de l'entrée (2) d'air froid, de l'autre côté en amont de l'entrée (3) d'air chaud, l'air chaud provenant de l'entrée (3) d'air chaud étant dirigé de l'autre côté, en amont de l'entrée (2) d'air froid, où l'air n'ayant pas pénétré dans les conduits (6) continue à être dirigé pratiquement de façon rectiligne, de sorte qu'un échange se produit dans la zone de la sortie (4) d'air de mélange.

2. Dispositif de mélange selon la revendication 1,
**caractérisé en ce que** le dispositif de mélange (1) présente des conduits (6) légèrement inclinés dans la direction de l'écoulement.

3. Dispositif de mélange selon la revendication 1 ou 2,
**caractérisé en ce que** les conduits (6) sont disposés sur un espace libre dans l'entrée (2) d'air froid et dans l'entrée (3) d'air chaud.

4. Dispositif de mélange selon l'une quelconque des revendications précédentes, **caractérisé en ce que** les parties dorsales (7) des conduits (6) sont de forme circulaire, ovale ou bien arrondies dans leur forme d'écoulement linéaire.

5. Dispositif de mélange selon l'une quelconque des revendications précédentes, **caractérisé en ce que** cinq à dix, en particulier six à huit conduits sont disposés dans chaque entrée (2, 3).

6. Dispositif de mélange selon l'une quelconque des revendications précédentes, **caractérisé en ce que** la largeur libre des conduits augmente en partant de la paroi de séparation (5) jusqu'au bord de la sortie (4).

7. Dispositif de mélange selon l'une quelconque des revendications précédentes, **caractérisé en ce que** la largeur des canaux allant d'une entrée (2 ou 3) à l'autre entrée (3 ou 2) diminue en direction du bord.

8. Dispositif de mélange selon l'une quelconque des revendications précédentes, **caractérisé en ce que** les conduits (6) sont configurés en forme d'arc.

9. Dispositif de mélange selon la revendication 8,
**caractérisé en ce que** les conduits (6) sont configurés de manière telle, que l'angle par rapport à la direction normale de l'écoulement augmente en allant vers le bord de la sortie (4) de l'air de mélange.

10. Dispositif de mélange selon l'une quelconque des revendications précédentes, **caractérisé en ce que** le dispositif de mélange (1) est une pièce en matière plastique moulée par injection.

11. Dispositif de mélange selon l'une quelconque des revendications précédentes, **caractérisé en ce que** les entrées (2, 3) sont configurées de manière telle, que la section se modifie, sur toute la longueur, passant d'une section en forme de cercle à une section en forme de demi-cercle.
